# NEW EUROPEAN PATENT SPECIFICATION

(11) **EP 3 230 328 B2**
(45) Date of publication and mention of the opposition decision: **09.12.2026**
(45) Mention of the grant of the patent: 14.02.2024
(21) Application number: 15804744.9
(22) Date of filing: 02.12.2015
(51) Int. Cl.: C08F 210/16, C08J 5/18, C08F 4/656, C08F 4/651, C08F 4/653

(54) **LINEAR LOW-DENSITY POLYETHYLENE MATERIALS FOR SELF-ADHESIVE FILMS**
LINEARE POLYETHYLENMATERIALIEN FÜR SELBSTKLEBENDE FOLIEN
MATÉRIAUX DE POLYÉTHYLÈNE BASSE DENSITÉ LINÉAIRE POUR FILMS AUTOCOLLANTS

(30) Priority: 12.12.2014 EP 14197560; 02.01.2015 US 201562099293 P
(43) Date of publication of application: 18.10.2017
(73) Proprietor: SABIC Global Technologies B.V., 4612 PX Bergen op Zoom (NL)
(72) Inventor: HABIBI, Salaheldin, Riyadh 11422 (SA); MOMAN, Akhlaq, Riyadh 11422 (SA); AL-OTAIBI, Abdullah Shamroukh, Riyadh 11422 (SA)
(74) Representative: Sabic Intellectual Property Group
(86) International application number: PCT/EP2015/078356
(87) International publication number: WO 2016/091680

(56) References cited:
- EP-B1- 0 963 832
- WO-A1-2012/069157
- WO-A1-2012/069157
- JP-A- 2002 254 511
- US-A- 5 955 205
- US-A1- 2003 130 464

## Description

The present invention relates to linear low-density polyethylene, also referred to as LLDPE, suitable for the production of self-adhesive films with improved film-to-film adhesion properties, in which the linear low-density polyethylene is produced using a Ziegler-Natta catalyst. The invention also relates to self-adhesive films produced with said linear low-density polyethylene materials.

Linear low-density polyethylenes are well-known materials for production of films. Linear low-density polyethylenes are polyethylenes that comprise short branches introduced by copolymerization of ethylene with second α-olefin used as comonomer, said second α-olefin having from 3 to 20 carbon atoms. The said second α-olefin may be selected from propylene, 1-butene, 1-pentene, 1-hexene, 1-octene, 4-methyl-1-pentene, 1,3-butadiene, 1,4-pentadiene, 1 ,5-hexadiene and mixtures thereof. Preferably, 1-butene, 1-hexene and 1-octene are used as second α-olefin, and most preferably 1-butene. The amount of the comonomer needed depends generally on the desired product properties and specific comonomer used. The skilled person can easily select the required amount to obtain the desired product. In general, LLDPE is provided containing 0.01 to 30 wt.% of one or more comonomers and from 70 to 99.99 wt.% of ethylene units. The polymerization process for producing LLDPE commonly is a catalytic process, in which a heterogeneous catalyst is used. Common catalyst systems include Ziegler-Natta catalysts, Phillips-type chromium catalysts and single-site catalysts, also known as metallocene catalysts. LLDPE may be manufactured via slurry processes, solutions processes and gas-phase processes. Preferably, the density of the LLDPE ranges between 915 and 0.935 kg/m³. LLDPE materials and the production thereof are well known and are for example presented in 'Polyethylene, linear low-density', Y. Kissin, in 'Kirk-Othmer Encyclopedia of Chemical Technology', John Wiley & Sons, 2000.

Polyethylene self-adhesive films are used to pack both food and non-food goods. The sealing property of the film, further referred to as film-to-film adhesion, is caused by an adhesive force that is provided by at least one of the surfaces of the film material itself. In the packaging process, films are subjected to a certain degree of stretching. The residual tension resulting from said stretching of the film provides a tight contour wrap.

Polyethylene materials for self-adhesive films comprise certain material parameters, such as for example film-to-film adhesion and stretchability, as well as optical parameters, such as for example clarity, gloss and haze.

Currently, polyethylene self-adhesive films, also referred to as 'cling films' or 'stretch wrap films', and further referred to as stretch wrap films, are mainly produced using polyethylene compositions comprising additives to increase the film-to-film adhesion. These additives are further referred to as cling improving additives. Commonly used cling improving additives are for example polyisobutylenes, ethylene/propylene copolymers, or fatty acid esters such as glyceryl stearates, glyceryl oleates, sorbitan oleates or sorbitan stearates. Most commonly, polyisobutylenes are used. Examples of such can be found in US6162318, in which LLDPE polyethylene materials that comprise a certain amount of polyisobutylene are presented.

Not only does addition of such cling improving additives incur additional costs and additional process steps, but also it may lead to several undesired effects. For example the cling improving additives have the tendency to migrate out of the polymer material and accumulate onto processing equipment, resulting in a periodic need for cleaning and maintenance. Also, they may migrate onto or even into the packed goods. To avoid these undesired effects, there is a need for polyethylene materials with inherent film-to-film adhesion properties. Inherent film-to-film adhesion properties are defined as film-to-film adhesion properties of the polyethylene material without addition of cling improving agents.

EP0287272A1 discloses films made from LLDPE materials with inherent film-to-film adhesion properties. This is achieved by use of specific LLDPE materials which have a hexane extractables fraction in a certain high range. The presence of this hexane extractable content is said to be related to the film-to-film adhesion properties of the material. However, the presence of hexane extractables in such quantities as indicated in EP0287272A1 leads to the disadvantage that the hexane extractable compounds may migrate out of the film during production, use and storage, which has several detrimental effects. For example, the build-up of hexane extractables at the die lip of the film extruder gives rise to additional film equipment cleaning and maintenance needs, thus limiting the on-stream time of production equipment and thus negatively influencing process economics. Furthermore, built-up material can detach from the die lip and end up on the surface of the produced film, forming so-called black spots that deteriorate film quality. Given that stretch wrap films are commonly used in rolls of film which are used to pack the desired goods, any defects present in the film may result in film breakage or blocking of film on the roll in the process of packaging goods using said stretch wrap films.

A high level of hexane extractables is not only undesirable in view of productivity or product quality, it also may result in migration of compounds onto or into packed goods. This is particularly undesirable in the case that the packed goods are intended for human consumption, such as foodstuffs. The maximum allowable quantities of hexane extractables in materials applied in the packaging of foodstuffs are subject to regulations. For polyethylene materials used for food packaging, the maximum hexane extractables content may for example be 5.5%.

Another solution to provide stretch wrap films of sufficient quality whilst avoiding the use of cling improving additives is provided in US5407732, in which 3-layer systems are presented, each containing a specific, different LLDPE/LDPE composition. The LDPE has the function to provide the film-to-film adhesion properties; the LLDPE is reported to inherently have little or no film-to-film adhesion properties. This solution has the drawback that a film system has to be made from multiple film layers, thus increasing complexity and cost of the stretch wrap film.

It is therefore an object of the present invention to provide a film comprising or consisting of a linear low-density polyethylene with low hexane extractables content as measured according to ASTM D-5227:95 and a high film-to-film adhesion as defined by blocking measured according to ASTM D-3354. It is another object of the present invention to provide for films comprising said linear low-density polyethylene which are suitable for use as stretch-wrap films.

This is achieved by a film comprising a linear low-density polyethylene having a hexane extractables content as measured according to ASTM D-5227:95 of less than 2.5 wt%, a film RMS roughness measured by AFM according to point 4.2.2 of ISO 4287:1997 of lower than 40 nm, and an average roughness measured by AFM according to point 4.2.1 of ISO 4287:1997 of lower than 30 nm and a melt index (MI) measured according to ASTM D1238 at a temperature of 190°C and a load of 2.16 kg of higher than 1.5 g/10 min and at most 10 g/10 min,
wherein the linear low-density polyethylene obtained by a process for producing a copolymer of ethylene and a second α-olefin as comonomer in the presence of an Advanced Ziegler-Natta catalyst, wherein said Advanced Ziegler-Natta catalyst is produced in a process comprising the steps of:
(a) contacting a dehydrated support having hydroxyl groups with a magnesium compound having the general formula MgR¹R², wherein R¹ and R² are the same or different and are independently selected from the group comprising an alkyl group, alkenyl group, alkadienyl group, aryl group, alkaryl group, alkenylaryl group and alkadienylaryl group;
(b) contacting the product obtained in step (a) with modifying compounds (A), (B) and (C), wherein:compound (A) is at least one compound selected from the group consisting of carboxylic acid, carboxylic acid ester, ketone, acyl halide, aldehyde and alcohol;
   compound (B) is a compound having the general formula R¹¹_{f}(R¹²O)_{g}SiXₕ, wherein f, g and h are each integers from 0 to 4 and the sum of f, g and h is equal to 4, Si is a silicon atom, O is an oxygen atom, X is a halide atom and R¹¹ and R¹² are the same or different and are independently selected from the group comprising an alkyl group, alkenyl group, alkadienyl group, aryl group, alkaryl group, alkenylaryl group and alkadienylaryl group;
   compound (C) is a compound having the general formula (R¹³O)₄M, wherein M is a titanium atom, a zirconium atom or a vanadium atom, O is an oxygen atom and R¹³ is selected from the group comprising an alkyl group, alkenyl group, alkadienyl group, aryl group, alkaryl group, alkenylaryl group and alkadienylaryl group; and
(c) contacting the product obtained in step (b) with a titanium halide compound having the general formula TiX₄, wherein Ti is a titanium atom and X is a halide atom;
characterized in that the linear low-density polyethylene has a film RMS roughness measured according to ISO 4287:1997, relating to measurement of geometrical product specifications for surface textures, at 5 µm samples, of lower than 40 nm, and an average roughness measured according to ISO 4287:1997, at 5 µm samples, of lower than 30 nm.

Preferably, the hexane extractables content measured according to ASTM D-5227:95 may be less than 2.0 wt%, even more preferably less than 1.5 wt%, even more preferably less than 1.0 wt%.

For easy processing of linear low-density polyethylene into films suitable for stretch-wrap film application, the linear low-density polyethylene according to the invention can have a melt index (MI) measured according to ASTM D1238 at a temperature of 190°C and a load of 2.16 kg of higher 1.5 g/10 min, more preferably higher than 2.0 g/10 min, and preferably lower than 100 g/10 min, more preferably lower than 80 g/10 min, more preferably lower than 50 g/10 min, more preferably lower than 25 g/10 min.

ISO 4287:1997 thereby relates to geometrical product specifications- Surface texture: Profile method. Atomic Force Microscopy (AFM) is thereby used for the measurements. The root mean square roughness (RMS roughness) can thereby be measured as described in point 4.2.2 of ISO 4287:1997 using AFM. The root mean square roughness (RMS roughness) can thus be the root mean square deviation of the assessed profile. The primary profile, the roughness profile or the waviness profile can be used therefore. However, preferably the primary profile can used for that. The average roughness can thereby be measured as described in point 4.2.1 of ISO 4287:1997 using AFM. The average roughness can thus be the arithmetical mean deviation of the assessed profile. The primary profile, the roughness profile or the waviness profile can be used therefore. However, preferably the primary profile can used for that. Measurements can preferably be done using AFM in tapping mode. An automatic plane fit and/or especially for example a "one dimensional bow removal" operation may be applied before the roughness measurements. Sampling length for the profile can preferably for example be 1 µm, 5 µm or 20 µm, preferably with for example 256 data points per line. The values for root mean square roughness (RMS roughness) and/or average roughness may also for example be averages of several measurements. Values for average roughness and/or RMS roughness can thereby for example be related to the morphology of the film, especially for example on the surface structure/texture and/or on to the size and/or form of crystalline and/or amorphous domains. The morphology of the film can thereby have an effect on the films properties. Film morphology can in turn especially for example be influenced by the nature of the catalyst used to produce the material of films. The inventors have thereby found that films with values according to the present invention for RMS roughness and/or average roughness may for example have properties, especially for example regarding film-to-film adhesion and/or the blocking force, that makes them particularly suitable for cling film applications. It is assumed that this is related for example to the surface structure of the obtained films, especially for example the crystalline structures or similar crystalline structures on adjacent film surfaces.

In a preferred embodiment, RMS roughness can be measured by AFM according to point 4.2.2 of ISO 4287:1997 is lower than 39 nm, more preferably lower than 38 nm, more preferably lower than 37 nm, more preferably lower than 36 nm, more preferably lower than 35 nm, more preferably lower than 34 nm, more preferably lower than 33 nm, more preferably lower than 32 nm, more preferably lower than 31 nm, more preferably lower than 30 nm, more preferably lower than 29 nm, more preferably lower than 28 nm, more preferably lower than 27 nm, more preferably lower than 26 nm, more preferably lower than 25 nm, more preferably lower than 24 nm, more preferably lower than 23 nm, more preferably lower than 22 nm, more preferably lower than 21 nm, more preferably lower than 20 nm, more preferably lower than 19 nm, more preferably lower than 18 nm, more preferably lower than 17 nm, more preferably lower than 16 nm, more preferably lower than 15 nm, more preferably lower than 14 nm, more preferably lower than 13 nm, more preferably lower than 12 nm, more preferably lower than 11 nm, more preferably lower than 10 nm.

In another preferred embodiment, the average roughness measured according to point 4.2.1 of ISO 4287:1997 is lower than 29 nm, more preferably lower than 28 nm, more preferably lower than 27 nm, more preferably lower than 26 nm, more preferably lower than 25 nm, more preferably lower than 24 nm, more preferably lower than 23 nm, more preferably lower than 22 nm, more preferably lower than 21 nm, more preferably lower than 20 nm, more preferably lower than 19 nm, more preferably lower than 18 nm, more preferably lower than 17 nm, more preferably lower than 16 nm, more preferably lower than 15 nm, more preferably lower than 14 nm, more preferably lower than 13 nm, more preferably lower than 12 nm, more preferably lower than 11 nm, more preferably lower than 10 nm.

In another embodiment, the invention relates to a film comprising said linear low-density polyethylene. In a preferred embodiment, said film is produced via cast film production or via blow extrusion film production.

The invention also relates to the use of said film as stretch-wrap film, for packaging of food products, and/or for packaging of non-food products.

Linear low-density polyethylenes according to the present invention have good processability, and molecular weight distribution characteristics as represented for example by MWD and Mz+1 that render them suitable for use in stretch-wrap film applications, with good optical properties.

### LLDPE

The film according to the invention can for example comprise and/or consist of the linear low-density polyethylene (LLDPE). The LLDPE can thereby be obtained by a process for producing an ethylene and another α-olefin in the presence of an Advanced Ziegler-Natta catalyst (AZ catalyst).

### Process for producing an AZ catalyst

The Advanced Ziegler-Natta catalyst is produced in a process comprising a first step (a) of contacting a dehydrated support having hydroxyl (OH) groups with a magnesium compound to form a solid magnesium containing support material.

The support is any material containing hydroxyl groups. Suitable examples of such materials include inorganic oxides, such as silica, alumina, magnesia, thoria, zirconia and mixtures of such oxides. Preferably, porous silica is used as the support as higher bulk densities and higher catalyst productivities are obtained therewith. Silica may be in the form of particles having a mean particle diameter of 1 micron to 500 microns, preferably from 5 microns to 150 microns and most preferably from 10 microns to 100 microns. Silica with a lower mean particle diameter can produce a higher level of polymer fines and silica with a higher mean particle diameter can reduce polymer bulk density. The silica may have a surface area of 5 m²/g to 1500 m²/g, preferably from 50 m²/g to 1000 m²/g and a pore volume of from 0.1 cm³/g to 10.0 cm³/g, preferably from 0.3 cm³/g to 3.5 cm³/g, as higher catalyst productivity is obtained in this range.

The dehydrated solid support can be obtained by drying the solid support in order to remove physically bound water and to reduce the content of hydroxyl groups to a level which may be of from 0.1 mmol to 5.0 mmol hydroxyl groups per gram of support, preferably from 0.2 mmol to 2.0 mmol hydroxyl groups per gram of support, as this range allows sufficient incorporation of the active catalyst components to the support, determined by the method as described in J.J. Fripiat and J. Uytterhoeven, J. Phys. Chem. 66, 800, 1962 or by applying ¹H NMR spectroscopy. The hydroxyl group content in this range may be achieved by heating and fluidizing the support at a temperature of from 150°C to 900°C for a time of 1 hour to 15 hours under a nitrogen or air flow. The dehydrated support can be slurried, preferably by stirring, in a suitable hydrocarbon solvent in which the individual catalyst components are at least partially soluble. Examples of suitable hydrocarbon solvents include n-pentane, isopentane, cyclopentane, n-hexane, isohexane, cyclohexane, n-heptane, isoheptane, n-octane, isooctane and n-decane. The amount of solvent used is not critical, though the solvent should be used in an amount to provide good mixing of the catalyst components.

The magnesium compound is represented by the general formula MgR¹R², wherein R¹ and R² are the same or different and are independently selected from a group comprising an alkyl group, alkenyl group, alkadienyl group, aryl group, alkaryl group, alkenylaryl group and an alkadienylaryl group and may have from 1 to 20 carbon atoms. Suitable examples of the magnesium compound include dimethylmagnesium, diethylmagnesium, ethylmethylmagnesium, di-n-propylmagnesium, diisopropylmagnesium, n-propylethylmagnesium, isopropylethylmagnesium, di-n-butylmagnesium, diisobutylmagnesium, n-n-butyl-n-propylmagnesium, n-butylisopropylmagnesium, isobutylethylmagnesium, isobutyl-n-propylmagnesium, isobutylisopropylmagnesium, di-n-pentylmagnesium, diisopentylmagnesium, n-pentylethylmagnesium, n-pentyl-n-propylmagnesium, n-pentylisopropylmagnesium, n-pentyl-n-butylmagnesium, n-pentylisobutylmagnesium, di-n-hexylmagnesium, diisohexylmagnesium, n-hexylethylmagnesium, n-hexyl-n-propylmagnesium, n-hexylisopropyl magnesium, n-hexyl-n-butylmagnesium, n-hexylisobutylmagnesium, isohexylethylmagnesium, isohexyl-n-propylmagnesium, isohexylisopropyl magnesium, isohexyl-n-butylmagnesium, isohexylisobutylmagnesium, di-n-octylmagnesium, diisooctylmagnesium, n-octylethylmagnesium, n-octyl-n-propylmagnesium, n-octylisopropylmagnesium, n-octyl-n-butylmagnesium, n-octylisobutyl magnesium, isooctylethylmagnesium, isooctyl-n-propylmagnesium, isooctylisopropylmagnesium, isooctyl-n-butylmagnesium, isooctylisobutyl magnesium, dicyclopentylmagnesium, cyclopentylethylmagnesium, cyclopentyl-n-propylmagnesium, cyclopentylisopropylmagnesium, cyclopentyl-n-butylmagnesium, cyclopentylisobutylmagnesium, dicyclohexylmagnesium, cyclohexylethylmagnesium, cyclohexyl-n-propylmagnesium, cyclohexylisopropyl magnesium, cyclohexyl-n-butylmagnesium, cyclohexylisobutylmagnesium, diphenylmagnesium, phenylethylmagnesium, phenyl-n-propylmagnesium, phenyl-n-butylmagnesium and mixtures thereof.

Preferably, the magnesium compound is selected from the group comprising di-n-butylmagnesium, n-butylethylmagnesium and n-octyl-n-butylmagnesium.

The magnesium compound can be used in an amount ranging from 0.01 to 10.0 mmol per gram of solid support, preferably from 0.1 to 3.5 mmol per gram of support and more preferably from 0.3 to 2.5 mmol per gram of support as by applying this range the level of polymer fines of the product is reduced and higher catalyst productivity is obtained. The magnesium compound may be reacted, preferably by stirring, with the support at a temperature of 15°C to 140°C during 5 minutes to 150 minutes, preferably at a temperature of 20°C to 80°C for a duration of 10 minutes to 100 minutes.

The molar ratio of Mg to OH groups in the solid support can be in the range of 0.01 to 10.0, preferably of from 0.1 to 5.0 and more preferably of from 0.1 to 3.5, as the level of polymer fines of the product is reduced and higher catalyst productivity is obtained. The modifying compound (A) is at least one compound selected from the group consisting of carboxylic acids, carboxylic acid esters, ketones, acyl halides, aldehydes and alcohols. The modifying compound (A) may be represented by the general formula R³COOH, R⁴COOR⁵, R⁶COR⁷, R⁸COX, R⁹COH or R¹⁰OH, wherein X is a halide atom and R³, R⁴, R⁵, R⁶, R⁷, R⁸, R⁹ and R¹⁰ are independently selected from a group of compounds comprising an alkyl group, alkenyl group, alkadienyl group, aryl group, alkaryl group, alkenylaryl group and an alkadienylaryl group and may have from 1 to 20 carbon atoms.

Suitable examples of the carboxylic acids include acetic acid, propionic acid, isopropionic acid, butyric acid, isobutyric acid, valeric acid, isovaleric acid, caproic acid, isocaproic acid, enanthic acid, isoenanthic acid, caprylic acid, isocaprylic acid, pelargonic acid, isopelargonic acid, capric acid, isocapric acid, cyclopentanecarboxylic acid, benzoic acid and mixtures thereof.

Suitable examples of carboxylic acid esters include methyl acetate, ethyl acetate, n-propyl acetate, isopropyl acetate, n-butyl acetate, isobutyl acetate, isoamyl acetate, ethyl butyrate, n-butyl butyrate and/or isobutyl butyrate.

Suitable examples of ketones include dimethyl ketone, diethyl ketone, methyl ethyl ketone, di-n-propyl ketone, di-n-butyl ketone, methyl n-propyl ketone, methyl isobutyl ketone, cyclohexanone, methyl phenyl ketone, ethyl phenyl ketone, n-propyl phenyl ketone, n-butyl phenyl ketone, isobutyl phenyl ketone, diphenyl ketone and mixtures thereof.

Suitable examples of acyl halides include ethanoyl chloride, propanoyl chloride, isopropanoyl chloride, n-butanoyl chloride, isobutanoyl chloride, benzoyl chloride and mixtures thereof.

Suitable examples of aldehydes include acetaldehyde, propionaldehyde, n-butyraldehyde, isobutyraldehyde, n-pentanaldehyde, isopentanaldehyde, n-hexanaldehyde, isohexanaldehyde, n-heptanaldehyde, benzaldehyde and mixtures thereof.

Suitable examples of alcohols include methanol, ethanol, n-propanol, isopropanol, n-butanol, isobutanol, sec-butanol, tert-butanol, cyclobutanol, n-pentanol, isopentanol, cyclopentanol, n-hexanol, isohexanol, cyclohexanol, n-octanol, isooctanol, 2-ethylhexanol, phenol, cresol, ethylene glycol, propylene glycol and mixtures thereof.

Preferably, the modifying compound (A) is at least one compound selected from the group comprising methyl n-propyl ketone, ethyl acetate, n-butyl acetate, acetic acid, isobutyric acid, isobutyraldehyde, ethanoyl chloride, ethanol and sec-butanol, and more preferably from methyl n-propyl ketone, n-butyl acetate, isobutyric acid and ethanoyl chloride as higher catalyst productivity and higher bulk density of the products are obtained and these compounds can be used to vary molecular weight distribution of the product.

The molar ratio of modifying compound (A) to magnesium in the solid support can be in a range of from 0.01 to 10.0, preferably of from 0.1 to 5.0, more preferably of from 0.1 to 3.5 and most preferably of from 0.3 to 2.5, as higher catalyst productivity and higher bulk density of the products are obtained. The modifying compound (A) may be added to the reaction product obtained in step (a), preferably by stirring, at a temperature of 15°C to 140°C for a duration of 5 minutes to 150 minutes, preferably at a temperature of 20°C to 80°C for a duration of 10 minutes to 100 minutes.

The modifying compound (B) is a silicon compound represented by the general formula R¹¹_{f}(R¹²O)_{g}SiXₕ, wherein f, g and h are each integers from 0 to 4 and the sum of a, b and c is equal to 4, Si is a silicon atom, O is an oxygen atom, X is a halide atom and R¹¹ and R¹² are the same or different, with a proviso that when c is equal to 4 then modifying compound (A) is not an alcohol. R¹¹ and R¹² are independently selected from the group of compounds comprising an alkyl group, alkenyl group, alkadienyl group, aryl group, alkaryl group, alkenylaryl group and an alkadienylaryl group. R¹¹ and R¹² may have from 1 to 20 carbon atoms.

Suitable silicon compounds include tetramethoxysilane, tetraethoxysilane, tetra-n-propoxysilane, tetraisopropoxysilane, tetra-n-butoxysilane, tetraisobutoxysilane, methyltrimethoxysilane, ethyltrimethoxysilane, n-propyltrimethoxysilane, isopropyltrimethoxysilane, n-butyltrimethoxysilane, isobutyltrimethoxysilane, n-pentyltrimethoxysilane, n-hexyltrimethoxysilane, n-octyltrimethoxysilane, isooctyltrimethoxysilane, vinyltrimethoxysilane, phenyltrimethoxysilane, dimethyldimethoxysilane, diethyldimethoxysilane, isobutylmethyldimethoxysilane, diisopropyldimethoxysilane, diisobutyldimethoxysilane, isobutylisopropyldimethoxysilane, dicyclopentyldimethoxysilane, cyclohexylmethyldimethoxysilane, phenylmethyldimethoxysilane, diphenyldimethoxysilane, trimethylmethoxysilane, triethylmethoxysilane, methyltriethoxysilane, ethyltriethoxysilane, n-propyltriethoxysilane, isopropyltriethoxysilane, n-butyltriethoxysilane, isobutyltriethoxysilane, n-pentyltriethoxysilane, n-hexyltriethoxysilane, n-octyltriethoxysilane, isooctyltriethoxysilane, vinyltriethoxysilane, phenyltriethoxysilane, dimethyldiethoxysilane, diethyldiethoxysilane, isobutylmethyldiethoxysilane, diisopropyldiethoxysilane, diisobutyldiethoxysilane, isobutylisopropyldiethoxy silane, dicyclopentyldiethoxysilane, cyclohexylmethyldiethoxysilane, phenylmethyldiethoxysilane, diphenyldiethoxysilane, trimethylethoxysilane, triethylethoxysilane, silicon tetrachloride, methyltrichlorosilane, ethyltrichlorosilane, n-propyltrichlorosilane, isopropyltrichlorosilane, n-butyltrichlorosilane, isobutyltrichlorosilane, n-pentyltrichlorosilane, n-hexyltrichlorosilane, n-octyltrichlorosilane, isooctyltrichlorosilane, vinyl Itrichlorosilane, phenyltrichlorosilane, dimethyldichlorosilane, diethyl dichlorosilane, isobutylmethyldichlorosilane, diisopropyldichlorosilane, diisobutyldichlorosilane, isobutylisopropyldichlorosilane, dicyclopentyldichloro silane, cyclohexylmethyldichlorosilane, phenylmethyldichlorosilane, diphenyldichlorosilane, trimethylchlorosilane, triethylchlorosilane, chloro trimethoxysilane, dichlorodimethoxysilane, trichloromethoxysilane, chloro triethoxysilane, dichlorodiethoxysilane and/or trichloroethoxysilane. Preferably, the modifying compound (B) used is selected from tetraethoxysilane, n-propyltriethoxysilane, isobutyltrimethoxysilane, dimethyldichlorosilane, n-butyltrichlorosilane and silicon tetrachloride, and more preferably selected from isobutyltrimethoxysilane, tetraethoxysilane, n-propyltriethoxysilane, n-butyltrichlorosilane and silicon tetrachloride as higher catalyst productivity and higher bulk density are obtained with the ability to vary the molecular weight distribution of the product by employing these preferred compounds.

The molar ratio of modifying compound (B) to magnesium may be in a range of from 0.01 to 5.0, preferably from 0.01 to 3.0, more preferably from 0.01 to1.0 and most preferably from 0.01 to 0.3, as higher catalyst productivity and higher bulk density are obtained. The modifying compound (B) may be added to the reaction product obtained in step (a), preferably by stirring, at a temperature of 15°C to 140°C during 5 minutes to 150 minutes, preferably at a temperature of 20°C to 80°C during 10 minutes to 100 minutes.

The modifying compound (C) is a transition metal alkoxide represented by the general formula (R¹³O)₄M, wherein M is a titanium atom, a zirconium atom or a vanadium atom, O is an oxygen atom and R¹³ is a compound selected from the group of compounds comprising an alkyl group, alkenyl group, alkadienyl group, aryl group, alkaryl group, alkenylaryl group and an alkadienylaryl group. R¹³ may have from 1 to 20 carbon atoms.

Suitable transition metal alkoxide compounds include titanium tetramethoxide, titanium tetraethoxide, titanium tetra-n-propoxide, titanium tetraisopropoxide, titanium tetra-n-butoxide, titanium tetraisobutoxide, titanium tetra-n-pentoxide, titanium tetraisopentoxide, titanium tetra-n-hexoxide, titanium tetra-n-heptoxide, titanium tetra-n-octoxide, titanium tetracyclohexoxide, titanium tetrabenzoxide, titanium tetraphenoxide, zirconium tetramethoxide, zirconium tetraethoxide, zirconium tetra-n-propoxide, zirconium tetraisopropoxide, zirconium tetra-n-butoxide, zirconium tetraisobutoxide, zirconium tetra-n-pentoxide, zirconium tetraisopentoxide, zirconium tetra-n-hexoxide, zirconium tetra-n-heptoxide, zirconium tetra-n-octoxide, zirconium tetracyclohexoxide, zirconium tetrabenzoxide, zirconium tetraphenoxide, vanadium tetramethoxide, vanadium tetraethoxide, vanadium tetra-n-propoxide, vanadium tetraisopropoxide, vanadium tetra-n-butoxide, vanadium tetraisobutoxide, vanadium tetra-n-pentoxide, vanadium tetraisopentoxide, vanadium tetra-n-hexoxide, vanadium tetra-n-heptoxide, vanadium tetra-n-octoxide, vanadium tetracyclohexoxide, vanadium tetrabenzoxide, vanadium tetraphenoxide or mixtures thereof. Preferably, titanium tetraethoxide, titanium tetra-n-butoxide and zirconium tetra-n-butoxide are used because higher catalyst productivity and higher bulk density are obtained with the ability to vary the molecular weight distribution of the product by employing these preferred compounds.

The molar ratio of the modifying compound (C) to magnesium may be in the range of from 0.01 to 5.0, preferably from 0.01 to 3.0, more preferably from 0.01 to 1.0 and most preferably from 0.01 to 0.3, as higher catalyst productivity, higher bulk density and improved hydrogen response in polymerization are obtained. The modifying compound (C) may be reacted, preferably by stirring, with the product obtained in step (a) at a temperature of 15°C to 140°C for a duration of 5 mi nutes to 150 minutes, preferably at a temperature of 20°C to 80°C for a duration of 10 mi nutes to 100 minutes.

The modifying compounds (A), (B) and (C) can be contacted in any order or simultaneously with the solid magnesium containing support obtained in step (a). Premixtures of the individual catalyst components can also be utilized. Preferably, (A) is added first to the reaction product obtained in step (a) and then (B), followed by the addition of (C) as higher catalyst productivity and higher product bulk density are obtained by employing this order of adding the modifying compounds.

Preferably, when modifying compound (A) is methyl n-propyl ketone and modifying compound (C) is titanium tetraethoxide, a further increase of molecular weight distribution is obtained when modifying compound (B) is selected in the following order from the group consisting of isobutyltrimethoxysilane, n-propyltriethoxysilane, tetraethoxysilane, n-butyltrichlorosilane and silicon tetrachloride, at the same levels of titanium halide compound.

In the preferred case when the modifying compound (B) is silicon tetrachloride and modifying compound (C) is titanium tetraethoxide, a further improved combination of catalyst productivity and bulk density is obtained when modifying compound (A) is selected in the following order from the group consisting of isobutyraldehyde, ethyl acetate, n-butyl acetate, methyl n-propyl ketone and isobutyric acid, at the same levels of titanium halide compound.

The titanium halide compound is represented by the general formula TiX₄, wherein Ti is a titanium atom and X is a halide atom.

Suitable titanium halide compounds include titanium tetrachloride, titanium tetrabromide, titanium tetrafluoride or mixtures thereof. The preferred titanium halide compound is titanium tetrachloride, as higher catalyst productivity is obtained. The molar ratio of the titanium halide compound to magnesium may be in the range of 0.01 to 10.0, preferably from 0.01 to 5.0 and more preferably from 0.05 to 1.0, as a better balance of high catalyst productivity and high bulk density is obtained.

The titanium halide compound may be added to the reaction mixture obtained by applying step (a) and step (b) in any conventional manner, such as by stirring, at a temperature of 15°C to 140°C for a duration of 5 minutes to 150 minutes , preferably at a temperature of 20°C to 80°C for a duration of 10 minutes to 100 minutes. The reaction mixture may be then dried using a nitrogen purge and/or by vacuum at a temperature from 15°C to 140°C, preferably 30°C to 100°C and most preferably 50°C to 80°C to yield the Advanced Ziegler-Natta catalyst component.

The total molar ratio of the modifying compound (C) and the titanium halide compound to magnesium may be in the range of from 0.01 to 10.0, preferably of from 0.01 to 5.0 and more preferably of from 0.05 to 1.0, as a better balance of high catalyst productivity and high bulk density is obtained.

The total molar ratio of the modifying compound (C) and the titanium halide compound to hydroxyl (OH) groups in the support after dehydration may be in the range of from 0.01 to 10.0, preferably of from 0.01 to 5.0 and more preferably of from 0.05 to 1.0, as a better balance of high catalyst productivity and high bulk density is obtained. Higher levels can thereby produce high catalyst productivity though with reduced bulk density, especially in for example a gas phase polymerization processes. Further, applying these amounts eliminates the requirement to conduct solvent decanting, solvent filtering, solvent washing steps in catalyst preparation and hence eliminates generation of highly hazardous solvent waste material.

In one embodiment the Advanced Ziegler-Natta catalyst system can comprise a catalyst component and a co-catalyst. The co-catalyst is typically an organometallic compound such as aluminum alkyls, aluminum alkyl hydrides, lithium aluminum alkyls, zinc alkyls, calcium alkyls, magnesium alkyls or mixtures thereof. Preferred co-catalysts are represented by the general formula R¹²ₙAlY³₃₋ₙ, wherein Y³ represents a halide atom; n represents an integer from 0 to 3; and R¹² is selected from a group of compounds comprising an alkyl group, alkenyl group, alkadienyl group, aryl group, alkaryl group, alkenylaryl group and alkadienylaryl group. R¹² may have from 1 to 20 carbon atoms. Suitable examples of the cocatalyst include trimethylaluminum, triethylaluminum, tri-isobutylaluminum, tri-n-hexylaluminum, tri-n-octylaluminum, diethylaluminum chloride, diisobutylalumium chloride, ethylaluminium dichloride, isobutyl aluminum dichloride and mixtures thereof. Preferably, the cocatalyst is trimethylaluminum, triethylaluminum and/or tri-isobutylaluminum; and more preferably, the cocatalyst is triethylaluminum.

The cocatalyst may be used in a molar ratio of aluminum in the co-catalyst to titanium in the solid catalyst component of from 1 to 500, more preferably from 10 to 250, as high catalyst productivity is obtained.

### Process for producing AZ LLDPE

The Advanced Ziegler-Natta catalyst system can be applied in slurry, gas or solution phase processes to obtain AZ LLDPE. Examples of such processes have already been described in the prior art and are thus well-known to the skilled person. Preferably, ethylene copolymers are produced by gas phase processes, such as stirred bed reactors and fluidized bed reactors or by slurry phase processes under polymerisation conditions already known in the art. Illustrative of gas phase processes are those disclosed for example in US 4302565 and US 4302566. A suitable example is a gas phase fluidized bed polymerization reactor fed by a dry or slurry catalyst feeder. The Advanced Ziegler-Natta catalyst may be introduced to the reactor in a site within the reaction zone to control the reactor production rate. The reactive gases, including ethylene and other alphaolefins, hydrogen and nitrogen may be introduced to the reactor. The produced polymer may be discharged from the reaction zone through a discharge system. The bed of polymer particles in the reaction zone may be kept in fluidized state by a recycle stream that works as a fluidizing medium as well as to dissipate exothermal heat generated within the reaction zone. The reaction and compression heats can be removed from the recycle stream in an external heat exchange system in order to control the reactor temperature. Other means of heat removal from within the reactor can also be utilized, for example by the cooling resulting from vaporization of hydrocarbons such as isopentane, n-hexane or isohexane within the reactor. These hydrocarbons can be fed to the reactor as part of component reactant feeds and/or separately to the reactor to improve heat removal capacity from the reactor. The gas composition in the reactor can be kept constant to yield a polymer with the required specifications by feeding the reactive gases, hydrogen and nitrogen to make-up the composition of the recycle stream.

Suitable operating conditions for the gas phase fluidized bed reactor typically include temperatures in the range of 50°C to 115°C, more preferably from 70°C to 110°C, an ethylene partial pressure from 3 bar to 15 bar, more preferably from 5 bar to 10 bar and a total reactor pressure from 10 bar to 40 bar, more preferably from 15 bar to 30 bar. The superficial velocity of the gas, resulting from the flow rate of recycle stream within reactor may be from 0.2 m/s to 1.2 m/s, more preferably 0.2 m/s to 0.9 m/s.

By applying the process and the Advanced Ziegler-Natta catalyst system AZ LLDPE can be produced. Suitable examples of AZ LLDPE may include ethylene copolymers with a second α-olefin used as comonomer, said second α-olefin having from 3 to 20 carbon atoms. The said second α-olefin may be selected from propylene, 1-butene, 1-pentene, 1-hexene, 1-octene, 4-methyl-1-pentene, 1,3-butadiene, 1,4-pentadiene, 1,5-hexadiene and mixtures thereof. Preferably, 1-butene, 1-hexene and 1-octene are used as second α-olefin, and most preferably 1-butene. The amount of the comonomer needed depends generally on the desired product properties and specific comonomer used. The skilled person can easily select the required amount to obtain the desired product. In general, AZ LLDPE is provided containing 0.01 to 30 wt.% of one or more comonomers and from 70 to 99.99 wt.% of ethylene units.

Films according to the present invention can comprise and/or consist of a linear low-density polyethylene (LLDPE) with a melt index (MI) of for example between > 1 g/10 min and 10 g/10 min, more preferably between 1.2 g/10 min and 7 g/10 min, more preferably between 1.3 g/10 min and 6 g/10 min , more preferably between 1.4 g/10 min and 5 g/10 min, more preferably between 1.5 g/10 min and 4 g/10 min, more preferably between 1.6 g/10 min and 3 g/10 min (measured according to ASTM D1238 at a temperature of 190°C and a load of 2.16 kg).

An AZ LLDPE with a melt index (MI) of at least for example 1.2 g/10 min, more preferably 1.5 g/10 min, more preferably 2.0 g/10 min, more preferably 2.5 g/10 min, and at most for example 150 g/10 min, preferably 80 g/10 min, more preferably 50 g/10 min, more preferably 25 g/10 min, more preferably 20 g/10 min, more preferably 15 g/10 min, more preferably 10 g/10min, more preferably 9.0 g/10 min, more preferably 8.0 g/10 min, more preferably 7.0 g/10 min, more preferably 6.0 g/10 min, more preferably 5.0 g/10 min, more preferably 4.0 g/10 min, more preferably 3.0 g/10 min (measured according to ASTM D1238 at a temperature of 190°C and a load of 2.16 kg) can be obtained by using the Advanced Ziegler-Natta catalyst by varying the hydrogen to ethylene molar ratio; increasing the hydrogen to ethylene molar ratio generally leads to an increase in the melt index. Also, the melt index of the polymers can be varied by controlling the polymerization temperature and the density of the polymer obtained. A polymer density in the range of for example at least 850 kg/m³, alternatively at least 880 kg/m³, alternatively at least 910 kg/m³, alternatively at least 915 kg/m³, and at most for example 935 kg/m³, alternatively 930 kg/m³, can be obtained by using the Advanced Ziegler-Natta catalyst and by varying the comonomer to ethylene molar ratio; for instance, increasing the comonomer to ethylene molar ratio typically leads to a reduction in density. Lower ratios of hydrogen to ethylene and lower ratios of comonomer to ethylene can be used to attain the target melt index and target polymer density, respectively, reducing the cost requirement of the utilisation of hydrogen and comonomer.

### Production of polyethylene films

The production of films from polyethylene compositions most commonly takes place by one of two principle processes: blow extrusion film production or cast film production. Both processes are known in the art and described in e.g. the Handbook of Plastic Films, E.M Abdel-Bary (ed.), Rapra Technology Ltd., 2003, in sections 2.3 and 2.4. Preferably, the film according to the present invention is produced via blown film production.

Films according to the invention can be made for example with a Battenfeld machine using a temperature profile of for example 100°C to 300 °C, preferably 120°C to 275°C , further preferred 150°C to 250°C, further preferred 175°C to 225°C, even further preferred 190°C to 200°C. Moreover, films according to the in vention can be made for example with a Battenfeld machine using a die gap of for example 0.1 mm to 7 mm, preferably, 0.5 mm to 5 mm, further preferred 0.75 mm to 4 mm, further preferred 1 mm to 3 mm. Furthermore, films according to the invention can be made for example with a Battenfeld machine with a frost line height of for example 10 cm to 90 cm, preferably 15 cm to 80 cm, further preferred 20 cm to 70 cm, further preferred 25 cm to 60 cm, further preferred 30 cm to 50 cm. In addition, films according to the invention can be made for example with a Battenfeld machine with
The production via the cast film method involves the extrusion of molten polymers through a flat die head onto a spinning roll to which the extrudate is detained, e.g. by a blast of air. The film is quenched on the surface of the spinning roll, which preferably is cooled, and finally wound onto a roll. Production of films by the blow extrusion method involves the extrusion of the molten polymers through a circular die, in which air is blown to expand and cool the extrudate into a tubular film. Upon cooling, this film is wound onto a roll.

### Examples

The invention will now be illustrated by the following non-limiting examples.

### Example 1

### Step 1: Preparation of the catalyst

2.5 g of Sylopol 955 silica which had been dehydrated at 600°C for 4 hours under a nitrogen flow was placed in a 40 cm³ flask. 15 cm³ of isopentane was added to slurry the silica, then 2.5 mmol of di-n-butyl magnesium was added to the flask, and the resultant mixture was stirred for 60 minutes at a temperature of 35°C. Th en, 3.5 mmol of methyl n-propyl ketone was added to the flask, and the resultant mixture was stirred for 60 minutes at a temperature of 35°C. Then, 0.25 mmol of tetraethoxysilane was added to the flask and the resultant mixture was stirred for 30 minutes at a temperature of 35°C. Next, 0.25 mmol of titanium tetraethoxide was added to the flask and the resultant mixture was stirred for 30 minutes at a temperature of 35°C. Subsequently, 1.75 mmol of titanium tetrachlo ride was added to the flask and the resultant mixture was stirred for 30 minutes at a temperature of 35°C. Finally, the slurry was dried using a nitrogen purge at 70°C for 60 minutes to field a free-flowing solid product.

### Step 2: Polymerisation

The catalyst as produced in step 1 was used to produce linear low-density polyethylene in a fluidized bed gas phase polymerization reactor. The fluidized bed gas phase polymerization reactor had an internal diameter of 45 cm and was operated with a 140 cm zone height. The catalyst was fed to the reactor using a dry solid catalyst feeder to maintain a production rate of 10 kg per hour. Ethylene, 1-butene, hydrogen and nitrogen were introduced to the reactor to yield polymer with the required specifications. 5 wt% triethylaluminium (co-catalyst) solution in isopentane was continuously introduced to the reactor at a feed rate of 0.08 kg per hour. The reactor temperature was maintained at 86°C, ethylene partial pressure at 7.0 bar, total reactor pressure at 20.7 bar and superficial gas velocity at 0.42 m/s. The process ran for three consecutive days.

### Step 3: Film production

200 ppm of Irganox 1076 (2,6-di-tert-butyl-4-(octadecanoxycarbonylethyl)phenol, CAS registry number 2082-79-3), 500 ppm of zinc oxide and 800 ppm of Irgafos 168 (tri(2,4-di-t-butylphenyl) phosphite,20CAS registry number 31570-04-4) were added in a Henschel mixer and mixed for 5 minutes with 25 kg of the linear low-density polyethylene produced in step 2. The mixed material was pelletized using a ZSK-30 twin-screw extruder under the following conditions: a temperature profile of 130°to 210°, screw speed of 200 rpm, screw diameter of 30 mm, screw length to diameter ratio of 26, and an output of 20 kg per hour. The obtained pellets were converted to a blown film of 25 µm thickness using a Battenfeld machine under the following conditions: a temperature profile of 190°C to 200°C, a screw speed of 60 rpm, a screw diameter of 60 mm, screw length to diameter ratio of 27, a die gap of 2.3 mm, a frost line height of 40 cm, a blow-up ratio of 2.5:1, and an output rate of 58 kg per hour.

### Example A (Comparative):

A sample of a commercially available grade was used. This grade is produced using a conventional Ziegler-Natta catalyst, using 1-butene as comonomer. Pellets of the LLDPE material were converted to a blown film of 25 µm thickness using a Battenfeld machine under the following conditions: a temperature profile of 190°C to 200°C, a screw speed of 60 rpm, a screw diameter of 60 mm, screw length to diameter ratio of 27, a die gap of 2.3 mm, a frost line height of 40 cm, a blow-up ratio of 2.5:1, and an output rate of 58 kg per hour.

In neither Example 1 or Example A, the LLDPE material comprised cling improving agents.

The properties of the LLDPE materials and films produced as described above are presented in table 1 below.

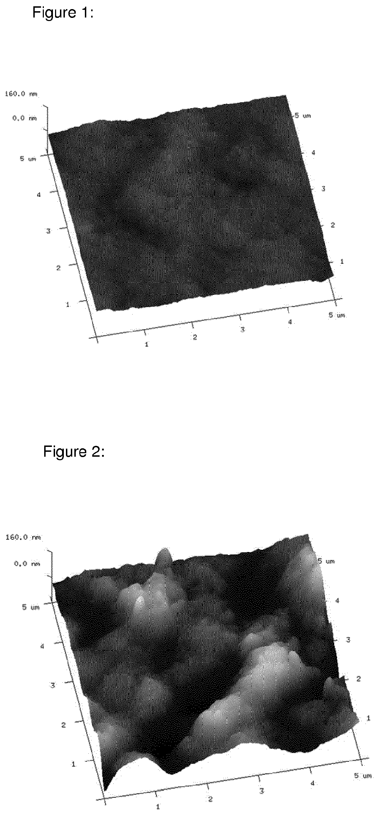

Samples of materials from examples 1 and A were subjected to topography imaging. The method use for topography imaging is described in Atomic Force Microscopy, V. Bellitto (ed), InTech, 2012, p. 147-174. The resulting images are presented in Figure 1 (example 1) and Figure 2 (example A).

**Table 1:**

| | Test method | Example 1 | Example A (comparative) |
|---|---|---|---|
| Density (kg/m³) | ASTM D-792 | 919 | 921 |
| Melt Index 2.16 kg/ 190°C (g/10 min) | ASTM D-1238 | 1.93 | 1.89 |
| Melt Index 21.6 kg / 190°C (g/10 min) | ASTM D-1238 | 56.76 | 45.84 |
| Melt Flow Rate | ASTM D-1238 | 29.35 | 24.22 |
| Mn (g/mole) | ASTM D-6474 99 | 27179 | 28903 |
| Mw (g/mole) | ASTM D-6474 99 | 113715 | 115343 |
| MWD (g/mole) | ASTM D-6474 99 | 4.18 | 3.99 |
| Mz (g/mole) | ASTM D-6474 99 | 352000 | 327000 |
| Mz+1 (g/mole) | ASTM D-6474 99 | 789000 | 735000 |
| Blocking (g) | ASTM D-3354 | 81.8 | 14.6 |
| Hexane extractables (wt%) | ASTM D-5227 95 | 1.51 | 1.47 |
| RMS roughness 5nm (nm) | ISO 4287 1997 | 12.0 | 45.0 |
| Average roughness 5nm (nm) | ISO 4287 1997 | 6.5 | 34.4 |
| Clarity (%) | ASTM D-1746 97 | 98.7 | 95.9 |
| Haze (%) | ASTM D-1003 | 7.96 | 20.87 |
| Gloss at 45° | ASTM D-2457 | 66.68 | 31.56 |
| Gloss at 60° | ASTM D-2457 | 105.19 | 72.16 |
| ASTM D-792 relates to a standard test method for density and specific gravity (relative density) of plastics by displacement. | | | |
| ASTM D-1238 relates to a standard test method for melt flow rates of thermoplastics by extrusion plastometer. | | | |
| ASTM D-6474 99 relates to a standard test method for determining molecular weight distribution and molecular weight averages of polyolefins by high temperature gel permeation chromatography. | | | |
| ASTM D-3354 relates to a standard test method for blocking load of plastic film by the parallel plate method. | | | |
| ISO 4287:1997 relates to geometrical product specifications- Surface texture: Profile method. The data regarding RMS roughness and average roughness given in Table 1 as well as the images Fig. 1 and Fig. 2 were obtained in tapping mode by AFM using A Bruker Dimension Edge AFM. Measurements were done on the primary profile with the Bruker Nanoscope V6.14 software. One dimensional bow removal was applied prior to measurements. Scan rate was 1Hz with 256 data points per line. Image size 5 µm by 5 µm. An OTESPA-R3 silicon probe with the following characteristics was used: cantilever thickness 3.7 µm, cantilever length 160 µm, cantilever width 40 µm; spring constant (k): 26 N/m; resonance frequency (f₀): 300 kHz. For RMS roughness and/or average roughness measurements sampling length was 5 µm. | | | |
| ASTM D-5227 95 relates to a standard test method for measurement of hexane extractable content of polyolefins. | | | |
| ASTM D-1746 97 relates to a standard test method for transparency of plastic sheeting. | | | |
| ASTM D-1003 relates to a standard test method for haze and luminous transmittance of transparent plastics. | | | |
| ASTM D-2457 relates to a standard test method for specular gloss of plastic films and solid plastics. | | | |

The AFM topographic images, obtained in tapping mode, as presented in Figure 1 (relating to example 1) and Figure 2 (relating to comparative example A) show that the surface structure of the material of example 1 is clearly different from the surface structure of the material according to comparative example A, in that the image of the material of comparative example A shows for example a globular morphology having significantly larger globules than is the case

## Claims

1. Film comprising a linear low-density polyethylene having a hexane extractables content as measured according to ASTM D-5227:95 of less than 2.5 wt% and a film RMS roughness measured by AFM according to point 4.2.2 ISO 4287:1997 of lower than 40 nm and an average roughness measured according to point 4.2.1 of ISO 4287:1997, of lower than 30 nm and a melt index (MI) measured according to ASTM D1238 at a temperature of 190°C and a load of 2.16 kg of higher than 1.5 g/10 min and at most 10 g/10 min,
in which said linear low-density polyethylene is obtained by a process for producing a copolymer of ethylene and a second α-olefin as comonomer in the presence of an Advanced Ziegler-Natta catalyst, wherein the Advanced Ziegler-Natta catalyst is produced in a process comprising the steps of:
(a) contacting a dehydrated support having hydroxyl groups with a magnesium compound having the general formula MgR¹R², wherein R¹ and R² are the same or different and are independently selected from the group comprising an alkyl group, alkenyl group, alkadienyl group, aryl group, alkaryl group, alkenylaryl group and alkadienylaryl group;
(b) contacting the product obtained in step (a) with modifying compounds (A), (B) and (C), wherein:compound (A) is at least one compound selected from thegroup consisting of carboxylic acid, carboxylic acid ester, ketone, acyl halide, aldehyde and alcohol;
compound (B) is a compound having the general formula R¹¹_{f}(R¹²O)_{g}SiXₕ, wherein f, g and h are each integers from 0 to 4 and the sum of f, g and h is equal to 4, Si is a silicon atom, O is an oxygen atom, X is a halide atom and R¹¹ and R¹² are the same or different and are independently selected from the group comprising an alkyl group, alkenyl group, alkadienyl group, aryl group, alkaryl group, alkenylaryl group and alkadienylaryl group;
compound (C) is a compound having the general formula (R¹³O)₄M, wherein M is a titanium atom, a zirconium atom or a vanadium atom, O is an oxygen atom and R¹³ is selected from the group comprising an alkyl group, alkenyl group, alkadienyl group, aryl group, alkaryl group, alkenylaryl group and alkadienylaryl group; and
(c) contacting the product obtained in step (b) with a titanium halide compound having the general formula TiX₄, wherein Ti is a titanium atom and X is a halide atom.

2. Film according to claim 1, wherein the second α-olefin is selected from propylene, 1-butene, 1-pentene, 1-hexene, 1-octene, 4-methyl-1-pentene, 1,3-butadiene, 1,4-pentadiene, 1,5-hexadiene and mixtures thereof.

3. Film according to any one or more of the claims 1-2, wherein the support for the Advanced Ziegler Natta catalyst is selected from silica, alumina, magnesia, thoria, zirconia or mixtures thereof.

4. Film according to any one or more of the claims 1-3, wherein compound (A) is selected from methyl-n-propyl ketone, ethyl acetate, n-butyl acetate, acetic acid, isobutyric acid, isobutyraldehyde, ethanoyl chloride, ethanol or sec-butanol.

5. Film according to any one or more of the claims 1-4, wherein compound (B) is selected from tetraethoxysilane, n-propyltriethoxysilane, isobutyltrimethoxysilane, dimethyldichlorosilane, n-butyltrichlorosilane or silicon tetrachloride.

6. Film according to any one or more of the claims 1-5, wherein compound (C) is selected from titanium tetraethoxide, titanium tetra-n-butoxide or zirconium tetra-n-butoxide.

7. Film according to any one or more of the claims 1-6, wherein TiX₄ is TiCl₄.

8. Production of a film according to any one or more of the claims 1-7 in which the film is produced via cast film production or via blow extrusion film production.

9. Production of a film according to any one or more of the claims 1-7 in which the film is produced with a temperature profile of 100°C to 300 °C and/or a die gap of 0.1 mm to 7 mm and/or a frost line height of 10 cm to 90 cm and/or a blow-up ratio of 1.2:1 to 5:1.

10. Use of film according to claim 1 or film produced according to claim 9 as stretch-wrap film, for packaging of food products, and/or for packaging of non-food products.

11. Use of film according to claim 1 for packaging of food products in which the packaged food product is suitable to be subjected to processing at cooking temperatures.

## Patentansprüche

1. Folie, umfassend ein lineares Polyethylen niedriger Dichte mit einem Gehalt an in Hexan extrahierbaren Stoffen, gemessen nach ASTM D-5227:95, von weniger als 2,5 Gew.-% und einer mittleren quadratischen Rauhigkeit der Folie, gemessen durch Rasterkraftmikroskopie gemäß Punkt 4.2.2 von ISO 4287:1997, von weniger als 40 nm und einer durchschnittlichen Rauhigkeit, gemessen gemäß Punkt 4.2.1 von ISO 4287:1997, von weniger als 30 nm, und einem Schmelzindex (MI), gemessen nach ASTM D1238 bei einer Temperatur von 190 °C und einer Belastung von 2,16 kg, von mehr als 1,5 g/10 min und höchstens 10 g/10 min,
wobei das lineare Polyethylen niedriger Dichte durch ein Verfahren zur Herstellung eines Copolymers aus Ethylen und einem zweiten α-Olefin als Comonomer in Gegenwart eines fortgeschrittenen Ziegler-Natta-Katalysators erhalten wird, wobei der fortgeschrittene Ziegler-Natta-Katalysator in einem Verfahren hergestellt wird, das die folgenden Schritte umfasst:
(a) Inkontaktbringen eines dehydratisierten Trägers mit Hydroxylgruppen mit einer Magnesiumverbindung mit der allgemeinen Formel MgR¹R², worin R¹ und R² gleich oder verschieden sind und unabhängig voneinander aus der Gruppe ausgewählt sind, die eine Alkylgruppe, Alkenylgruppe, Alkadienylgruppe, Arylgruppe, Alkarylgruppe, Alkenylarylgruppe und Alkadienylarylgruppe umfasst;
(b) Inkontaktbringen des in Schritt (a) erhaltenen Produkts mit modifizierenden Verbindungen (A), (B) und (C), wobei: Verbindung (A) mindestens eine Verbindung ist, die aus der aus Carbonsäure, Carbonsäureester, Keton, Acylhalogenid, Aldehyd und Alkohol bestehenden Gruppe ausgewählt ist;
Verbindung (B) eine Verbindung mit der allgemeinen Formel R¹¹_{f}(R¹²O)_{g}SiXₕ ist, worin f, g und h jeweils ganze Zahlen von 0 bis 4 sind und die Summe von f, g und h gleich 4 ist, Si ein Siliciumatom ist, O ein Sauerstoffatom ist, X ein Halogenidatom ist und R¹¹ und R¹² gleich oder verschieden sind und unabhängig voneinander aus der Gruppe ausgewählt sind, die eine Alkylgruppe, Alkenylgruppe, Alkadienylgruppe, Arylgruppe, Alkarylgruppe, Alkenylarylgruppe und Alkadienylarylgruppe umfasst;
Verbindung (C) eine Verbindung mit der allgemeinen Formel (R¹³O)₄M ist, wobei M ein Titanatom, ein Zirkoniumatom oder ein Vanadiumatom ist, O ein Sauerstoffatom ist und R¹³ aus der Gruppe ausgewählt ist, die eine Alkylgruppe, Alkenylgruppe, Alkadienylgruppe, Arylgruppe, Alkarylgruppe, Alkenylarylgruppe und Alkadienylarylgruppe umfasst; und
(c) Inkontaktbringen des in Schritt (b) erhaltenen Produkts mit einer Titanhalogenidverbindung mit der allgemeinen Formel TiX₄, worin Ti ein Titanatom und X ein Halogenidatom ist.

2. Folie nach Anspruch 1, wobei das zweite a-Olefin aus Propylen, 1-Buten, 1-Penten, 1-Hexen, 1-Octen, 4-Methyl-1-penten, 1,3-Butadien, 1,4-Pentadien, 1,5-Hexadien und Mischungen davon ausgewählt ist.

3. Folie nach einem oder mehreren der Ansprüche 1 bis 2, wobei der Träger für den fortgeschrittenen Ziegler-Natta-Katalysator aus Siliciumdioxid, Aluminiumoxid, Magnesiumoxid, Thoriumoxid, Zirkoniumdioxid oder Mischungen davon ausgewählt ist.

4. Folie nach einem oder mehreren der Ansprüche 1-3, wobei Verbindung (A) aus Methyl-n-propylketon, Ethylacetat, n-Butylacetat, Essigsäure, Isobuttersäure, Isobutyraldehyd, Ethanoylchlorid, Ethanol oder sec-Butanol ausgewählt ist.

5. Folie nach einem oder mehreren der Ansprüche 1 bis 4, wobei Verbindung (B) aus Tetraethoxysilan, n-Propyltriethoxysilan, Isobutyltrimethoxysilan, Dimethyldichlorsilan, n-Butyltrichlorsilan oder Siliciumtetrachlorid ausgewählt ist.

6. Folie nach einem oder mehreren der Ansprüche 1 bis 5, wobei Verbindung (C) aus Titantetraethoxid, Titantetra-n-butoxid oder Zirkoniumtetra-n-butoxid ausgewählt ist.

7. Folie nach einem oder mehreren der Ansprüche 1-6, wobei TiX₄ TiCl₄ ist.

8. Herstellung einer Folie nach einem oder mehreren der Ansprüche 1-7, wobei die Folie durch Gießfolienherstellung oder durch Blasfolienherstellung hergestellt wird.

9. Herstellung einer Folie nach einem oder mehreren der Ansprüche 1-7, wobei die Folie mit einem Temperaturprofil von 100 °C bis 300 °C und/oder einem Düsenspalt von 0,1 mm bis 7 mm und/oder einer Frostlinienhöhe von 10 cm bis 90 cm und/oder einem Aufblasverhältnis von 1,2:1 bis 5:1 hergestellt wird.

10. Verwendung der Folie nach Anspruch 1 oder der nach Anspruch 8 hergestellten Folie als Stretchfolie zum Verpacken von Lebensmittelprodukten und/oder zum Verpacken von Nichtlebensmittelprodukten.

11. Verwendung der Folie nach Anspruch 1 zum Verpacken von Lebensmittelprodukten, wobei das verpackte Lebensmittelprodukt dazu geeignet ist, einer Verarbeitung bei Kochtemperaturen unterzogen zu werden.

## Revendications

1. Film comprenant un polyéthylène linéaire basse densité ayant une teneur en matières extractibles à l'hexane telle que mesurée selon la norme ASTM D-5227:95 inférieure à 2,5% en poids et une rugosité quadratique moyenne de film mesurée par microscopie à force atomique selon le point 4.2.2 de l'ISO 4287:1997 inférieure à 40 nm et une rugosité moyenne mesurée selon le point 4.2.1 de l'ISO 4287:1997, inférieure à 30 nm et un indice de fluidité (MI) mesuré selon la norme ASTM D1238 à une température de 190°C et une charge de 2,16 kg supérieur à 1,5 g/10 min et d'au plus 10 g/10 min,
dans lequel ledit polyéthylène linéaire basse densité est obtenu par un procédé de production d'un copolymère d'éthylène et d'une seconde α-oléfine comme comonomère en présence d'une version évoluée d'un catalyseur de Ziegler-Natta, dans lequel la version évoluée du catalyseur de Ziegler-Natta est produite dans un procédé comprenant les étapes de :
(a) mise en contact d'un support déshydraté ayant des groupes hydroxyle avec un composé magnésium répondant à la formule générale MgR¹R², dans laquelle R¹ et R² sont identiques ou différents et sont indépendamment choisis dans le groupe comprenant un groupe alkyle, un groupe alcényle, un groupe alcadiényle, un groupe aryle, un groupe alkaryle, un groupe alcénylaryle et un groupe alcadiénylaryle ;
(b) mise en contact du produit obtenu à l'étape (a) avec des composés modificateurs (A), (B) et (C), dans laquelle : le composé (A) est au moins un composé choisi dans le groupe constitué de l'acide carboxylique, de l'ester d'acide carboxylique, de la cétone, de l'halogénure d'acyle, de l'aldéhyde et de l'alcool ;
le composé (B) est un composé répondant à la formule générale R¹¹_{f}(R¹²O)_{g}SiXₕ, dans laquelle f, g et h sont chacun des nombres entiers de 0 à 4 et la somme de f, g et h est égale à 4, Si est un atome de silicium, O est un atome d'oxygène, X est un atome d'halogénure et R¹¹ et R¹² sont identiques ou différents et sont indépendamment choisis dans le groupe comprenant un groupe alkyle, un groupe alcényle, un groupe alcadiényle, un groupe aryle, un groupe alkaryle, un groupe alcénylaryle et un groupe alcadiénylaryle ;
le composé (C) est un composé répondant à la formule générale (R¹³O)₄M, dans laquelle M est un atome de titane, un atome de zirconium ou un atome de vanadium, O est un atome d'oxygène et R¹³ est choisi dans le groupe comprenant un groupe alkyle, un groupe alcényle, un groupe alcadiényle, un groupe aryle, un groupe alkaryle, un groupe alcénylaryle et un groupe alcadiénylaryle ; et
(c) mise en contact du produit obtenu à l'étape (b) avec un composé halogénure de titane répondant à la formule générale TiX₄, dans laquelle Ti est un atome de titane et X est un atome d'halogénure.

2. Film selon la revendication 1, dans lequel la seconde α-oléfine est choisie parmi le propylène, le 1-butène, le 1-pentène, le 1-hexène, le 1-octène, le 4-méthyl-1-pentène, le 1,3-butadiène, le 1,4-pentadiène, le 1,5-hexadiène et leurs mélanges.

3. Film selon l'une quelconque ou plusieurs des revendications 1 et 2, dans lequel le support pour la version évoluée du catalyseur de Ziegler Natta est choisi parmi la silice, l'alumine, la magnésie, la thorine, la zircone ou leurs mélanges.

4. Film selon l'une quelconque ou plusieurs des revendications 1 à 3, dans lequel le composé (A) est choisi parmi la méthyl-n-propylcétone, l'acétate d'éthyle, l'acétate de n-butyle, l'acide acétique, l'acide isobutyrique, l'isobutyraldéhyde, le chlorure d'éthanoyle, l'éthanol ou le sec-butanol.

5. Film selon l'une quelconque ou plusieurs des revendications 1 à 4, dans lequel le composé (B) est choisi parmi le tétraéthoxysilane, le n-propyltriéthoxysilane, l'isobutyltriméthoxysilane, le diméthyldichlorosilane, le n-butyltrichlorosilane ou le tétrachlorure de silicium.

6. Film selon l'une quelconque ou plusieurs des revendications 1 à 5, dans lequel le composé (C) est choisi parmi le tétraéthoxyde de titane, le tétra-n-butoxyde de titane ou le tétra-n-butoxyde de zirconium.

7. Film selon l'une quelconque ou plusieurs des revendications 1 à 6, dans lequel TiX₄ est TiCl4.

8. Production d'un film selon l'une quelconque ou plusieurs des revendications 1 à 7, dans laquelle le film est produit via une production de film coulé ou via une production de film par extrusion-soufflage.

9. Production d'un film selon l'une quelconque ou plusieurs des revendications 1 à 7, dans laquelle le film est produit avec un profil de température de 100°C à 300°C et/ou un écartement de filière de 0,1 mm à 7 mm et/ou une hauteur de ligne de gel de 10 cm à 90 cm et/ou un taux de soufflage de 1,2:1 à 5:1.

10. Utilisation d'un film selon la revendication 1 ou du film produit selon la revendication 8 comme film étirable, pour l'emballage de produits alimentaires, et/ou pour l'emballage de produits non alimentaires.

11. Utilisation d'un film selon la revendication 1 pour l'emballage de produits alimentaires dans laquelle le produit alimentaire emballé est apte à être soumis à un traitement à des températures de cuisson.
